# EUROPEAN PATENT APPLICATION

(11) **EP 4 838 944 A1**
(43) Date of publication of application: **11.11.2026**
(21) Application number: 25744529.6
(22) Date of filing: 20.01.2025
(51) Int. Cl.: H04W 24/10, G06F 16/23

(54) **NODE SELECTION METHOD AND COMMUNICATION APPARATUS**

(30) Priority: 22.01.2024 CN 202410092807
(71) Applicant: Huawei Technologies Co., Ltd., Shenzhen, Guangdong 518129 (CN)
(72) Inventor: WANG, Ruixin, Shenzhen, Guangdong 518129 (CN); WANG, Fei, Shenzhen, Guangdong 518129 (CN); MA, Mengyao, Shenzhen, Guangdong 518129 (CN)
(74) Representative: Huawei European IPR
(86) International application number: PCT/CN2025/073247
(87) International publication number: WO 2025/157088

(57) **Abstract**

This application provides a node selection method and a communication apparatus. The method includes: sending first information to N terminal devices, where the first information includes information about a first dataset of a network device; receiving second information from each of the N terminal devices, where the second information includes a statistical distance of each of the N terminal devices, and the statistical distance indicates a distance between a second dataset of each of the N terminal devices and the first dataset; determining M terminal devices based on the second information; sending indication information, where the indication information indicates the M terminal devices; receiving the second dataset from each of the M terminal devices; and performing model training based on the second dataset of each of the M terminal devices. Based on the foregoing method, the network device may selectively sample a training dataset, to improve a convergence rate of model training and reduce communication overheads.

## Description

This application claims priority to Chinese Patent Application No. 202410092807.6, filed with the China National Intellectual Property Administration on January 22, 2024 and entitled "NODE SELECTION METHOD AND COMMUNICATION APPARATUS", which is incorporated herein by reference in its entirety.

### TECHNICAL FIELD

This application relates to the field of communication technologies, and more specifically, to a node selection method and a communication apparatus.

### BACKGROUND

To improve intelligence and automation levels of networks, inference models, such as artificial intelligence (artificial intelligence, AI) models and machine learning (machine learning, ML) models, are applied to more technical fields. A model is usually obtained through training. In some application scenarios, model training and collection of datasets required for model training may be deployed on different devices. For example, a plurality of terminal devices may collect training datasets required for model training, and send the collected training datasets to a network device, and the network device performs model training to update the model. However, sending the training datasets to the network device by all the terminal devices introduces excessive communication losses and computational overheads.

In an existing solution, a network device randomly samples training datasets collected by terminal devices to participate in training, but a convergence rate of the model is low. Therefore, a new method is urgently needed, to cause a network device to selectively sample a training dataset, thereby improving the convergence rate of model training and reducing communication overheads.

### SUMMARY

This application provides a node selection method and a communication apparatus, so that a network device can selectively sample a training dataset, thereby improving a convergence rate of model training and reducing communication overheads.

According to a first aspect, a node selection method is provided. The method may be performed by a network device, or may be performed by a component (for example, a chip, a chip system, or a circuit) of a network device. This is not limited. For ease of description, an example in which the method is performed by the network device is used below for description.

The method includes: sending first information to N terminal devices, where the first information includes information about a first dataset of a network device; receiving second information from each of the N terminal devices, where the second information includes a statistical distance of each of the N terminal devices, and the statistical distance of each of the N terminal devices indicates a distance between a second dataset of each of the N terminal devices and the first dataset; determining M terminal devices based on the second information; sending indication information, where the indication information indicates the M terminal devices; receiving the second dataset from each of the M terminal devices; and performing model training based on the second dataset of each of the M terminal devices.

N is an integer greater than 1, M is a positive integer, and M is less than or equal to N.

Based on the foregoing technical solution, a terminal device is selected by considering a statistical distance between a training dataset collected by each of a plurality of terminal devices and a dataset of the network device, that is, a training dataset collected by the terminal device is selected. The network device can selectively sample the training dataset and effectively use data in a distributed environment, thereby improving a convergence rate of model training and reducing communication overheads.

With reference to the first aspect, in some implementations of the first aspect, the sending the indication information includes: sending a broadcast signal, where the broadcast signal includes first indication information, and the first indication information indicates a set of the M terminal devices; or sending second indication information to each of the M terminal devices, where the second indication information indicates the respective terminal devices.

Based on the foregoing technical solution, the network device notifies the selected M terminal devices by using a broadcast signal or separately sending indication information, so that the M terminal devices learn that the M terminal devices have been selected and can participate in model training. This avoids unnecessary communication. Because only the selected terminal device needs to participate in data transmission in model training, system communication overheads are reduced.

With reference to the first aspect, in some implementations of the first aspect, the determining the M terminal devices based on the second information includes: determining the M terminal devices based on a statistical distance ratio corresponding to each of the N terminal devices, where the statistical distance ratio is a ratio of a statistical distance of each of the N terminal devices to a largest statistical distance among the statistical distances of the N terminal devices.

In some possible implementations, the M terminal devices are M terminal devices with a largest statistical distance ratio in the N terminal devices.

Based on the foregoing technical solution, the network device can select a terminal device based on a statistical distance between datasets, to be specific, select a terminal device with a largest statistical distance ratio, that is, a dataset with a large sample error, so that model convergence can be accelerated.

With reference to the first aspect, in some implementations of the first aspect, the second information further includes a communication capability of each of the N terminal devices, and the communication capability includes at least one of the following: a distance between each of the N terminal devices and the network device, or energy consumption per unit data amount of each of the N terminal devices.

In some possible implementations, the selecting the M terminal devices based on the second information includes: determining the M terminal devices based on the statistical distance ratio and a communication capability ratio that correspond to each of the N terminal devices, where the statistical distance ratio is a ratio of a statistical distance of each of the N terminal devices to a largest statistical distance among the statistical distances of the N terminal devices, and the communication capability ratio is a ratio of the communication capability of each of the N terminal devices to a largest communication capability in the communication capabilities of the N terminal devices.

In some possible implementations, the M terminal devices are M terminal devices having the top M largest target values among the N terminal devices, and the target value is a sum or a weighted sum of the statistical distance ratio and the communication capability ratio.

Based on the foregoing technical solution, when selecting a terminal device, the network device comprehensively considers two factors: a statistical distance and a communication capability, and flexibly adjusts weights of the two factors in selecting the terminal device through weighting. This comprehensive selection manner can balance impact of the statistical distance and the communication capability, and can adapt to different requirements on the communication capability and data similarity in different scenarios.

With reference to the first aspect, in some implementations of the first aspect, the information about the first dataset is the first dataset, and the statistical distance is the distance between the second dataset of each of the N terminal devices and the first dataset.

In some possible implementations, the information about the first dataset is statistical information of the first dataset, and the statistical distance is a distance between statistical information of the second dataset of each of the N terminal devices and the statistical information of the first dataset.

Optionally, the distance includes at least one of the following: a Fréchet distance, a maximum mean discrepancy, an earth mover's (Wasserstein) distance, and a Kolmogorov-Smirnov (Kolmogorov-Smirnov) distance.

Based on the foregoing technical solution, the distance between the datasets is obtained based on the information about the corresponding first dataset, and computing capabilities of a plurality of terminal devices are properly used to reduce overheads. In addition, there are a plurality of options for a distance calculation manner, which helps consider impact of different distance calculation manners on model training.

According to a second aspect, a node selection method is provided. The method may be performed by a terminal device, or may be performed by a component (for example, a chip, a chip system, or a circuit) of a terminal device. This is not limited. For ease of description, an example in which the method is performed by the terminal device is used below for description.

The method includes: receiving first information from a network device, where the first information includes information about a first dataset of the network device; sending second information, where the second information includes a statistical distance, the statistical distance indicates a distance between a second dataset of a terminal device and the first dataset, and the second information is used to determine M terminal devices; receiving indication information, where the indication information indicates the M terminal devices; and sending the second dataset in response to the indication information, where the second dataset is used for model training.

M is a positive integer.

Based on the foregoing technical solution, the statistical distance helps obtain difference information between the dataset of the terminal device and the dataset of the network device, and provides a metric of the statistical distance for selection of the network device. This can effectively use data in a distributed environment, improve a convergence rate of model training, and reduce communication overheads.

With reference to the second aspect, in some implementations of the second aspect, the receiving the indication information includes: receiving a broadcast signal, where the broadcast signal includes first indication information, and the first indication information indicates a set of the M terminal devices; or receiving second indication information, where the second indication information indicates the terminal device.

Based on the foregoing technical solution, the broadcast signal is received or separate indication information is received, to learn that the M terminal devices have been selected by the network device and can participate in model training, so as to transmit a dataset required for model training, thereby avoiding unnecessary communication and reducing overall communication overheads.

With reference to the second aspect, in some implementations of the second aspect, the second information further includes a communication capability, and the communication capability includes at least one of the following: a distance between the terminal device and the network device, or energy consumption per unit data amount of the terminal device.

Optionally, the terminal device obtains the distance between the terminal device and the network device, or obtains the energy consumption per unit data amount of the terminal device.

Based on the foregoing technical solution, the terminal device obtains the communication capability of the terminal device, to help the network device comprehensively consider factors such as communication efficiency and energy consumption during selection.

With reference to the second aspect, in some implementations of the second aspect, the information about the first dataset is the first dataset, and the statistical distance is the distance between the second dataset and the first dataset.

In some possible implementations, the information about the first dataset is statistical information of the first dataset, and the statistical distance is a distance between statistical information of the second dataset and the statistical information of the first dataset.

Optionally, the distance includes at least one of the following: a Fréchet distance, a maximum mean discrepancy, an earth mover's (Wasserstein) distance, and a Kolmogorov-Smirnov (Kolmogorov-Smirnov) distance.

Based on the foregoing technical solution, the terminal device may calculate the distance between the datasets based on the information about the corresponding first dataset, and properly use computing capabilities of a plurality of terminal devices to reduce overheads. In addition, there are a plurality of options for a distance calculation manner, which helps consider impact of different distance calculation manners on model training.

According to a third aspect, this application provides a communication apparatus. The communication apparatus may include modules that are in one-to-one correspondence with methods/operations/steps/actions that are configured to perform the first aspect or the second aspect. The module may be a hardware circuit, may be software, or may be implemented by a hardware circuit in combination with software. The communication apparatus may be a first network element, a second network element, or a chip or a circuit used in a first network element or a second network element.

In an implementation, the communication apparatus is a communication device. For example, the communication device may include a communication unit and/or a processing unit. The communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in the terminal device, the communication unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

In an example, the communication apparatus is a network device, or the communication apparatus is a chip, a chip system, a circuit, or the like disposed in a network device. In another example, the communication apparatus is a terminal device, or the communication apparatus is a chip, a chip system, a circuit, or the like disposed in a terminal device.

According to a fourth aspect, this application provides a communication apparatus. The communication apparatus includes a processor, and the processor is configured to execute a computer program or instructions stored in a memory, to perform the method according to the first aspect, the second aspect, or any one of the implementations of the first aspect or the second aspect. Optionally, the communication apparatus further includes the memory. The communication apparatus may be a network device or a terminal device, or a chip or a circuit used in a network device or a terminal device.

According to a fifth aspect, this application provides a communication apparatus. The communication apparatus includes a processor and a communication interface, and is configured to perform the method according to the first aspect, the second aspect, or any one of the implementations of the first aspect or the second aspect. For example, the communication interface may be a transceiver, a hardware circuit, a bus, a module, a pin, or a communication interface of another type.

According to a sixth aspect, a chip or a chip system is provided. The chip or the chip system includes a processor. The processor is configured to run a program or instructions, to implement the method according to any one of the first aspect or the possible implementations of the first aspect, or implement the method according to any one of the second aspect or the possible implementations of the second aspect. Optionally, the chip may further include a memory, and the memory is configured to store the program or the instructions. Optionally, the chip may further include a transceiver.

According to a seventh aspect, a computer-readable storage medium is provided. The computer-readable storage medium includes instructions. When the instructions are run by a processor, the method according to any one of the first aspect or the possible implementations of the first aspect is implemented, or the method according to any one of the second aspect or the possible implementations of the second aspect is implemented.

According to an eighth aspect, a computer program is provided. When the computer program is run on a computer, the computer is caused to perform the method according to the first aspect, the second aspect, or any one of the implementations of the first aspect or the second aspect.

According to a ninth aspect, a computer program product is provided. The computer program product includes computer program code or instructions. When the computer program code or the instructions are run, the method according to any one of the first aspect or the possible implementations of the first aspect is implemented, or the method according to any one of the second aspect or the possible implementations of the second aspect is implemented.

According to a tenth aspect, a communication system is provided, and includes one or more of the foregoing network devices and terminal devices.

### BRIEF DESCRIPTION OF DRAWINGS

FIG. 1 is a diagram of a communication system according to an embodiment of this application;
FIG. 2 is a diagram of a fully-connected neural network according to an embodiment of this application;
FIG. 3 is a diagram of distributed learning according to an embodiment of this application;
FIG. 4 is a diagram of other distributed learning according to an embodiment of this application;
FIG. 5 shows a node selection method according to an embodiment of this application;
FIG. 6 shows another node selection method according to an embodiment of this application;
FIG. 7 is a diagram of a communication apparatus according to an embodiment of this application; and
FIG. 8 is a diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th Generation, 5G) system or a new radio (new radio, NR) system and a future communication system, and vehicle-to-everything (Vehicle-to-X V2X). V2X may include vehicle-to-network (Vehicle-to-Network, V2N), vehicle-to-vehicle (Vehicle-to-Vehicle, V2V), vehicle-to-infrastructure (vehicle-to-infrastructure, V2I), vehicle-to-pedestrian (vehicle-to-pedestrian, V2P), and the like, a long term evolution-vehicle (long term evolution-vehicle, LTE-V) technology, internet of vehicles, machine-type communication (machine-type communication, MTC), internet of things (internet of things, IoT), and a long term evolution-machine (long term evolution-machine, LTE-M) technology, machine-to-machine (machine to machine, M2M), and the like.

A device in the communication system may send a signal to another device or receive a signal from another device. The signal may include information, signaling, data, or the like. The device may alternatively be replaced with an entity, a network entity, a node, a communication device, a communication module, a network element, a communication node, or the like. In this application, the device is used as an example for description.

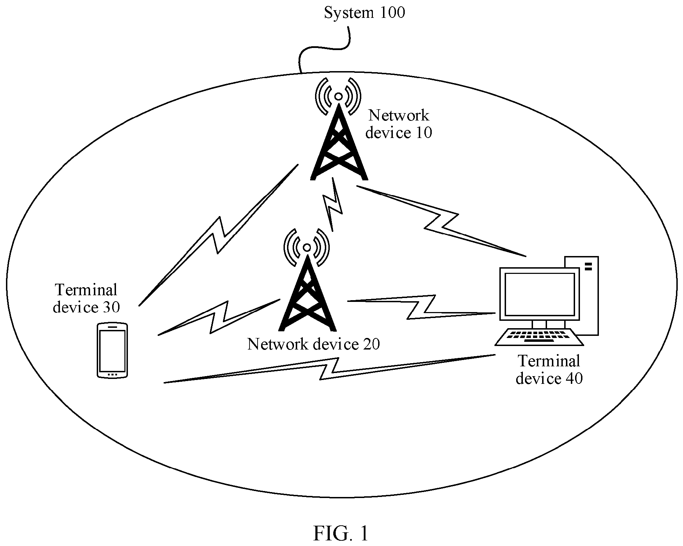

FIG. 1 is a diagram of a communication system according to an embodiment of this application. As shown in FIG. 1, the communication system 100 may include one or more network devices, for example, a network device 10 and a network device 20 shown in FIG. 1. The communication system 100 may further include one or more terminal devices, for example, a terminal device 30 and a terminal device 40 shown in FIG. 1. Four terminal devices (the network device 10, the network device 20, the terminal device 30, and the terminal device 40) may communicate with each other through a radio link, to exchange information.

In an implementation, the communication system may further include an AI entity. The network device may forward data that is reported by a terminal device and that is related to an AI model to the AI entity, and the AI entity performs AI-related operations such as training dataset construction and model training, and provides outputs, such as a trained AI model, model evaluation, and a test result, of the AI-related operations to the network device. In another implementation, the AI entity may alternatively be located inside the network device 10 or the network device 20, that is, a module of the network device 10 or the network device 20.

In actual application, one network device may simultaneously serve one or more terminal devices. One terminal device may also simultaneously access one or more network devices. It may be understood that the network device and the terminal device may also be referred to as communication devices. A quantity of network devices and a quantity of terminal devices included in the communication system are not limited in embodiments of this application.

For example, the network device may be a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technology, RAT), names of a device having a base station function may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central unit, CU), one or more distributed units (distributed unit, DU), or one or more radio units (radio unit, RU). In different systems, the CU (or a CU-CP and a CU-UP), the DU, or the RU may also have different names, but a person skilled in the art may understand meanings thereof. For example, the radio access network may alternatively be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented via a software module, a hardware module, or a combination of a software module and a hardware module. For example, functions of the CU may be implemented by one entity or different entities. For example, the functions of the CU are further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, may be software functions run on dedicated hardware, or may be virtualized functions instantiated on a platform (for example, a cloud platform). A first device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, an apparatus configured to implement a function of the network device may be the network device, or may be an apparatus that can support the network device in implementing the function, for example, a chip system or a combined device or component that can implement a function of the access network device. The apparatus may be installed in the network device. In embodiments of this application, the chip system may include a chip, or may include a chip and another discrete device.

For example, the terminal device may be a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine/machine type communication, M2M/MTC), internet of things, virtual reality (virtual reality, VR), augmented reality (augmented reality, AR), industrial control (industrial control), self-driving (self-driving), telemedicine (remote medical), smart grids (smart grid), smart furniture, smart office, smart wearables, smart transportation, smart cities (smart city), uncrewed aerial vehicles, and robots. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in an IoT system. IoT is an important part in future information technology development. A main technical feature of the IoT is to connect a thing to a network through a communication technology, to implement an intelligent network for human-machine interconnection and thing-thing interconnection. In embodiments of this application, the IoT technology can implement massive connections, deep coverage, and terminal power saving by using, for example, a narrowband (narrowband, NB) technology. In embodiments of this application, an apparatus configured to implement a function of the terminal device may be the terminal device, or may be an apparatus that can support the terminal device in implementing the function, for example, a chip system or a combined device or component that can implement a function of the terminal device. The apparatus may be installed in the terminal device.

The network device and the terminal device may be deployed on land, including an indoor device, an outdoor device, a handheld device, or a vehicle-mounted device; may be deployed on water; or may be deployed on an airplane, a balloon, and a satellite in the air. Scenarios that the network device and the terminal device are in are not limited in embodiments of this application.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF is a control plane network function provided by the operator network. In embodiments of this application, when the communication system 100 includes the AF network element and the SMF network element, the AF may send service-related information to the network device through the SMF.

It should be understood that a quantity of devices and types of the devices in the communication system shown in FIG. 1 are merely used as an example, and this application is not limited thereto. In actual application, the communication system may further include more terminal devices, more network devices, and more positioning devices, and may further include another network element, for example, may include a core network device and/or a network element configured to implement an artificial intelligence function.

It should be further understood that division of manners, cases, categories, and embodiments in embodiments of this application is merely intended for ease of description, and should not constitute a specific limitation. Features in various manners, categories, cases, and embodiments may be combined without contradiction.

It should be further understood that, in embodiments of this application, sequence numbers of processes do not mean execution sequences. The execution sequences of the processes should be determined based on functions and internal logic of the processes, and shall not constitute any limitation on implementation processes of embodiments of this application.

It should be noted that in embodiments of this application, "preset", "predefine", "preconfigure", or the like may be implemented by prestoring corresponding code or a table in a device (for example, including a terminal device and a network device), or in another manner that may be for indicating related information. A specific implementation of "preset", "predefine", "preconfigure", or the like, for example, preconfigured information in embodiments of this application, is not limited in this application.

For clarity, some terms in embodiments of this application are explained below.
(1) Model: A function learned from data that can implement a specific function/mapping. A model may be obtained based on an artificial intelligence (artificial intelligence, AI) or machine learning (machine learning, ML) technique, and therefore, the model may also be referred to as an artificial intelligence (AI) model, a machine learning (ML) model, or the like. Common algorithms for generating the AI/ML model include supervised learning, unsupervised learning, and reinforcement learning, and corresponding models may be referred to as a supervised learning model, an unsupervised learning model, and an reinforcement learning model. For example, the supervised learning model may be a classification model, a prediction model, a regression model, or the like, and the unsupervised learning model may be a clustering model. In addition, the model may alternatively be obtained based on a neural network (neural network, NN) technique, and such a model may also be referred to as a neural network model, a deep learning model, or the like.
(2) Training dataset: Data used for model training, validation, and testing in machine learning, where the quantity and quality of the data will affect performance of machine learning. Training data may include an input of an AI model, or include an input and a target output of an AI model. The target output is a target value output by the AI model, and may also be referred to as a ground truth output, a label, or a label sample.
   It should be understood that the training dataset is a set of training samples. Each training sample serves as an input of a neural network. The training dataset is used for model training. The training dataset is one of the most important parts of machine learning. A training process of machine learning is essentially learning some features from the training dataset, so that under the training dataset, a difference between an output of the neural network and an ideal target value (that is, the label or the ground truth output) is minimized. Generally, even if a same network structure is used, weights and outputs of the neural network trained by using different training datasets are both different. Therefore, composition and selection of the training dataset determine, to some extent, performance of the trained neural network.
(3) Supervised learning: An objective of supervised learning is to learn, given a training dataset (including a plurality of pairs of inputs and outputs), a mapping relationship between input (data) and output (a label) in the training dataset. In addition, it is expected that the mapping relationship can be further applied to data outside the training dataset. The training dataset is a set of correct input-output pairs.

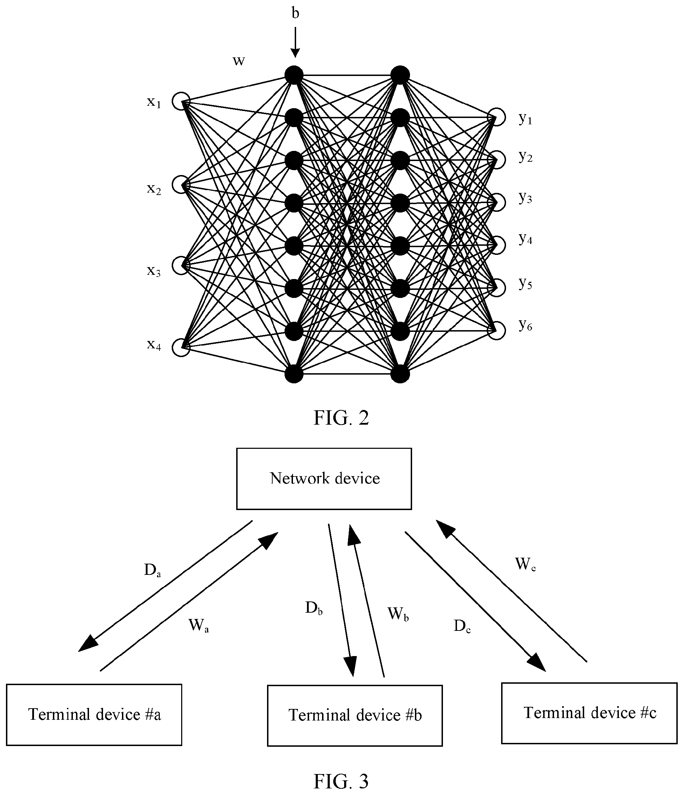

A fully-connected neural network is used as an example. FIG. 2 is a diagram of a fully-connected neural network according to an embodiment of this application. The fully-connected neural network is also referred to as a multilayer perceptron (multilayer perceptron, MLP). One MLP includes an input layer (on the left), an output layer (on the right), and a plurality of hidden layers (in the middle). Each layer includes several nodes, which are referred to as neurons. Neurons at two adjacent layers are connected to each other.

In consideration of neurons at two adjacent layers, an output *h* of a neuron in a subsequent layer is obtained by performing an activation function on a weighted sum of all neurons x at a previous layer connected thereto. Expressed in a matrix form, it can be represented as: $h = f \left(wx+b\right)$ (Formula 1) where W is a weight matrix, *b* is a bias vector, and *f* is an activation function.

In this case, an output of the neural network may be recursively expressed as: $y = {f}_{n} \left({w}_{n}{f}_{n - 1}\left(⋯\right)+{b}_{n}\right)$ (Formula 2)

Briefly, the neural network may be understood as a mapping relationship from an input dataset to an output dataset. The neural network is usually initialized randomly, and a process of obtaining the mapping relationship by using random W and b and existing data is referred to as training of the neural network.

A specific manner of the training may adopt a loss function (loss function) to evaluate an output result of the neural network, backpropagate an error, and iteratively optimize W and b using a gradient descent method until the loss function reaches a minimum value. A gradient descent process may be represented as follows: $θ ← θ - η \frac{\partial L}{\partial θ}$ (Formula 3) where *θ* is a parameter to be optimized (for example, *w and* b mentioned above), *L is* a loss function, and *η* is a learning rate that controls a step size of the gradient descent.

A backpropagation process may use a chain rule for partial differentiation. To be specific, a gradient of a parameter of a previous layer may be recursively calculated based on a gradient of a parameter of a subsequent layer, and a formula may be represented as follows: $\frac{\partial L}{\partial {w}_{ij}} = \frac{\partial L}{\partial {s}_{i}} \frac{\partial {s}_{i}}{\partial {w}_{ij}}$ (Formula 4)

With the advent of the big data era, each device (including a network device and a terminal device) generates a large amount of raw data in various forms. The data is generated and exists in all corners of the world in the form of "data silos". Conventional centralized learning requires all edge devices to transmit local data together to a server at a central end, after which the server at the central end performs model training and learning by using the collected data. However, this architecture is gradually restricted by the following factors with development of the era:
(1) Edge devices are widely distributed in various regions and corners of the world. These devices continuously generate and accumulate massive amounts of raw data at a rapid speed. If the central end needs to collect the raw data from all the edge devices, huge communication losses and computational power requirements are caused.
(2) As actual scenarios in real life become more complex, more learning tasks require that the edge device can decide and provide feedback effectively and in a timely manner. In conventional centralized learning, because uploading of a large amount of data causes a large latency, a real-time requirement of an actual task scenario cannot be met.
(3) In consideration of problems such as industry competition, user privacy security, and complex administrative procedures, centralized integration of data faces increasing resistance and constraints. Therefore, for system deployment, data increasingly tends to be locally stored, and an edge device completes local computing.

It should be understood that the central end may be a network device in the following, and the edge device may be a terminal device in the following. This is not limited in this application.

The following describes the technical solutions provided in this application.

FIG. 3 is a diagram of distributed learning according to an embodiment of this application. As shown in FIG. 3, in distributed learning, a network device may randomly select a terminal device to deliver a central dataset. For example, a central dataset D (including a dataset *Dₐ*, a dataset *D_{b}*, and a dataset *D_{c}*) is delivered to a plurality of terminal devices (for example, a terminal device #a, a terminal device #b, and a terminal device #c in FIG. 3). The plurality of the terminal devices each perform model training by using a local compute resource, and upload a trained model W (including a model *Wₐ* a model *W_{b}*, and a model *W_{c}*) to the network device. In this learning architecture, the network device has all datasets, and the terminal device does not need to collect a local dataset. In this learning architecture, a computing capability of the terminal device is used to help perform model training, so that computing pressure of the network device can be offloaded.

It should be understood that the central dataset is a dataset collected by the network device for model training.

Although this distributed learning architecture offloads the computing pressure of the network device to some extent, there are some disadvantages: First, after each training round ends, the terminal device needs to upload a locally trained model of the terminal device to the network device. This involves transmission of a large quantity of model parameters, especially when the model is large or network conditions are poor, which may result in significant communication overheads. Second, because the network device performs update only by using the model uploaded by the terminal device, and does not use local data, a convergence rate of a model may be slow. Consequently, the network device may be incapable of directly sensing local data of each terminal device, which affects global performance of the model.

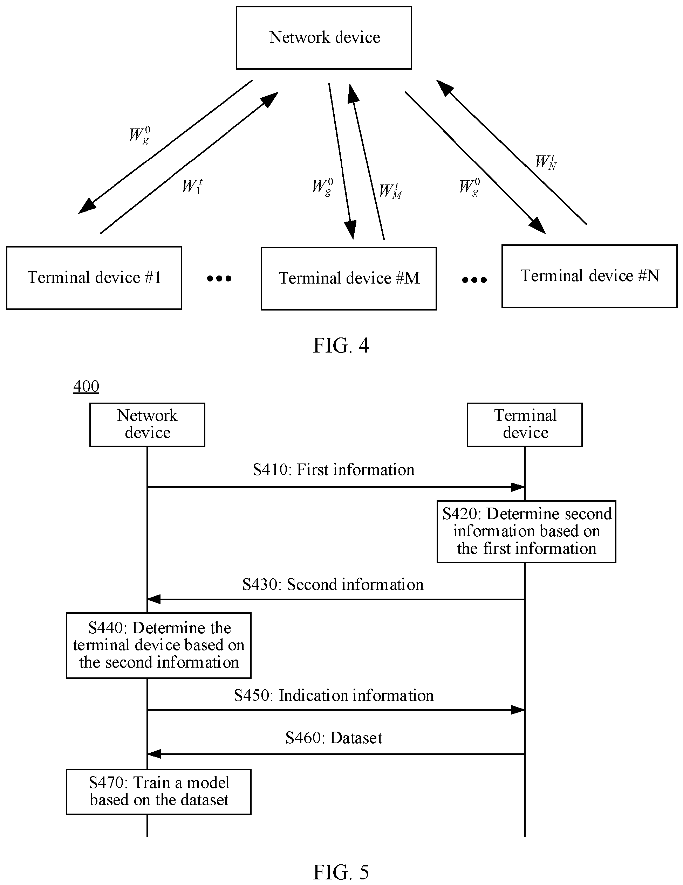

FIG. 4 is a diagram of other distributed learning according to an embodiment of this application. As shown in FIG. 4, an algorithm procedure is roughly as follows:
(1) A network device initializes a to-be-trained model ${W}_{g}^{0}$, and sends, through broadcasting, the to-be-trained model to all terminal devices, for example, a terminal device #1, ..., a terminal device #M, ..., a terminal device #N in the figure.
(2) An M^{th} terminal device (the terminal device #M) is used as an example. In a t^{th} (t∈[1, T]) round, the terminal device #M trains a received global model ${W}_{g}^{t - 1}$ based on a local dataset *D_{M}* to obtain a local training result ${W}_{M}^{t}$, and reports the local training result to the network device.
(3) The network device summarizes and collects local training results from all (or some) terminal devices. It is assumed that a set of terminals that upload local models in the t^{th} round is *S^{t}*, the network device performs weighted average calculation by using a quantity of samples corresponding to the terminal devices as a weight, to obtain a new global model. A specific update rule is as follows: ${W}_{g}^{t} = {\sum }_{M ∈ {S}^{t}} \frac{D {′}_{M} {W}_{M}^{t}}{{\sum }_{M ∈ {S}^{t}} D {′}_{M}}$, where *M* ∈ [1, *N*] , and *D'_{M}* represents an amount of data included in the dataset *D_{M}*. Then, the network device sends, through broadcasting, the global model ${W}_{g}^{t}$ of the latest version to all terminal devices for a new round of training.
(4) Step (2) and Step (3) are repeated until the model finally converges or a quantity of training rounds reaches an upper limit.

For the terminal device #M, in addition to reporting the local model ${W}_{M}^{t}$ to the network device, the terminal device #M may further report a trained local gradient. The network device averages local gradients, and updates the global model based on a direction of an average gradient.

Therefore, in the foregoing distributed learning framework, a training dataset exists in a terminal device. To be specific, the terminal device collects a local dataset, performs local training, and reports a local result (model or gradient) obtained through training to the network device. The network device does not have a dataset, and is only responsible for converging training results of terminal devices, to obtain a global model, and delivering the global model to the terminal devices. However, because the entire model is periodically obtained through convergence by using a federated averaging algorithm, a convergence rate is slow, and convergence performance has a specific defect. In addition, the distributed learning usually requires the network device to deliver a model to a plurality of terminal devices. In a scenario in which a model scale is large, communication overheads are excessively high, and requirements on computing, storage, and communication capabilities of the device are high.

Therefore, how to select a terminal device to participate in training is a complex problem that may affect a model training effect. Embodiments of this application provide a node selection method, to improve a convergence rate and utilization efficiency of data and computational power in a model training process. In addition, in the solutions provided in this application, content exchanged between a network device and a terminal device is only a training dataset. When a quantity of model parameters is large, communication overheads can be significantly reduced, and requirements on computing, storage, and communication capabilities of a device can also be reduced.

FIG. 5 shows a node selection method 400 according to an embodiment of this application. As shown in FIG. 5, the method 400 may include step S410 to step S470.

S410: A network device sends first information to a terminal device, and correspondingly, the terminal device receives the first information.

For example, an RRC layer of the network device sends the first information to the terminal device.

The first information includes information about a central dataset, and the information about the central dataset may be the central dataset or statistical information of the central dataset.

It should be understood that the central dataset is a dataset of the network device, and the dataset of the network device is used for model training. For ease of description, in this application, the central dataset is used to describe the dataset of the network device. This is not limited.

Optionally, the central dataset is a dataset obtained by the network device based on an updated model after training on a previous-round model ends.

Optionally, the statistical information of the central dataset includes at least one of the following: an empirical distribution, a statistical moment, compression, down-sampling, and the like.

For example, in the empirical distribution, for a given dataset, a probability distribution function of the dataset is obtained by normalizing frequencies of samples. The empirical distribution is a cumulative distribution function of relative frequencies of data points in the dataset, and is used to describe an actually observed data distribution.

For example, the statistical moment is a statistical quantity describing a data distribution shape, and common moments include a mean, a variance, skewness, kurtosis, and the like. The mean describes a central location of a dataset, the variance shows a dispersion degree of data, the skewness shows symmetry of a distribution, and the kurtosis describes sharpness or flatness of a distribution.

For example, compression may be a process of performing dimension reduction on a dataset or extracting a main feature. This can be achieved through various compression algorithms, principal component analysis (PCA), feature selection, and other methods. Compression helps reduce data storage space, reduce computing costs, and retain important key information of data.

For example, down-sampling means extracting a subset from an original dataset, to reduce a quantity of data points. This helps improve computational efficiency during processing of large-scale data, and in some cases, down-sampling does not significantly cause important information of the dataset to be lost. In statistical analysis and machine learning, down-sampling can be used to quickly explore data or reduce a scale of data during training.

It should be understood that the network device may send the first information to a plurality of terminal devices in a broadcast manner. A quantity of the terminal devices is not limited in this application.

Optionally, the first information further includes indication information that indicates a calculation manner of a statistical distance.

It should be understood that the statistical distance indicates a distance between two datasets, and the calculation manner of the statistical distance includes but is not limited to a Fréchet distance, a maximum mean discrepancy, an earth mover's (Wasserstein) distance, and a Kolmogorov-Smirnov (Kolmogorov-Smirnov) distance.

For ease of understanding the solutions of this application, the following first briefly describes the calculation manner of the statistical distance.

### (1) Fréchet distance

The Fréchet distance is a description of similarity in path space. Specifically, two curves or paths are given, where each curve is considered as a function, and are defined in a shared parameter space. For the Fréchet distance, movement of the two paths in the parameter space is considered, and consistency of positions and consistency of directions are both considered when the two paths are compared.

Calculation of the Fréchet distance involves optimal matching between two functions. It can be considered as placing two points on two paths respectively, and then moving the two points along the paths, so that the two points are always on the respective corresponding paths. The Fréchet distance is a maximum distance between the two points in an entire movement process.

A specific calculation manner may be represented in a mathematical formula as follows: $F \left(P, Q\right) = {inf}_{αβ} {max}_{t ∈ \left[0, 1\right]} d \left(P\left(α\left(t\right)\right),Q\left(β\left(t\right)\right)\right)$ (Formula 5) where *P* and *Q* are two paths; α and β are mappings of parameterized paths *P* and *Q*; *t* is a variable in the parameter space; *d* is a defined distance metric between points in the parameter space; *inf* represents taking the infimum of all possible α and β; and *max* represents taking a maximum value in the entire parameter space.

If the Fréchet distance is used to measure a difference between datasets, each data point in a dataset can be considered as a point on a path, and the entire dataset is considered as a path. That is, a metric that defines a distance between data points can be selected, which usually depends on a type and property of the dataset. For example, a Euclidean distance, a Manhattan distance, or other distance metrics suitable for the data type can be used. Subsequently, parameterization may be introduced into a path for each dataset by making data points correspond to points in a parameter space, which means that each data point has a corresponding location in the parameter space, thereby forming a path.

For example, it is assumed that there are two datasets *X* and *Y*, and the datasets *X* and *Y* can be considered as a path *X* and a path *Y*. In this case, a formula of the Fréchet distance can be expressed as: $F \left(X, Y\right) = {inf}_{αβ} {max}_{t} d \left(X\left(α\left(t\right)\right),Y\left(β\left(t\right)\right)\right)$ (Formula 6)

Therefore, the Fréchet distance provides a quantitative manner to measure a difference between two datasets. A smaller Fréchet distance indicates higher shape similarity between the datasets, and a larger Fréchet distance indicates lower shape similarity between the datasets.

### (2) Maximum mean discrepancy

The maximum mean discrepancy (Maximum Mean Discrepancy, MMD) is a method used to measure a distance between two different but related random variable distributions. The MMD is widely used in the field of machine learning, especially in transfer learning and evaluation of generative models.

A core idea of the MMD is to measure a discrepancy between two distributions by comparing sample means of the two distributions. Calculation formula of the MMD is usually based on a kernel method, and a common definition is to calculate MMD between two distributions *P* and *Q* by using a kernel function *k*. $MMD \left(P, Q\right) = {sup}_{f} \left({E}_{P}\left[f\left(x\right)\right]-{E}_{Q}\left[f\left(y\right)\right]\right)$ (Formula 7)

*f* is a norm of the kernel function *k* in the space, and *sup* represents taking the supremum. An intuitive explanation of the formula is that in the MMD, a maximized function *f* is found on all possible kernel functions *k* such that a mean discrepancy between *P* and *Q* under this function is maximum.

In transfer learning, the MMD is often used as a loss function to measure a distribution difference between a source domain and a target domain. By minimizing the MMD, distributions of the two domains can be closer to each other, thereby improving generalization performance of a model in the target domain. In addition, the MMD can also be used to compare a distance between two datasets, especially when a distribution difference is considered. The following is a simple example that illustrates how to use the MMD to compare two datasets.

It is assumed that there are two datasets represented as a dataset *X* and a dataset *Y* , and each dataset includes a plurality of samples. For example, if a sample point of the dataset *X* is *x* and a sample point of the dataset *Y* is *y*, the following steps may be used to compare a distribution difference between the two datasets.

First, a proper kernel function *k* is selected. This usually depends on a property of data. For example, a Gaussian kernel is a good choice in many cases. Finally, the selected kernel function *k* is used to calculate MMD, to be specific, calculate MMD between the two datasets *X* and Y. The MMD can be calculated by using a kernel-based method for sample means. A formula is as follows: $MMD \left(X, Y\right) = {sup}_{f} \left({E}_{X}\left[f\left(x\right)\right]-{E}_{Y}\left[f\left(y\right)\right]\right)$ (Formula 8)

Therefore, a smaller MMD value indicates more similar distributions of two datasets. By contrast, a larger MMD value indicates a larger distribution discrepancy between the two datasets.

### (3) Earth mover's (Wasserstein) distance

The Wasserstein distance is used to compare a distance between two distributions, and is especially suitable for handling distributions with different shapes and masses. A core idea of the Wasserstein distance is a minimum cost required for converting one distribution to another distribution. The cost is obtained by using the distance between the two distributions as a weight. One of main advantages of the Wasserstein distance is that it is more robust in processing small changes and non-overlapping areas between distributions. The following uses a simple example to illustrate how to compare two datasets by using the Wasserstein distance.

It is assumed that there are two datasets represented as a dataset *X* and a dataset *Y,* and each dataset includes a plurality of samples. For example, if a sample point of the dataset *X* is x and a sample point of the dataset *Y* is *y*, the following steps may be used to compare a distribution difference between the two datasets:

First, each dataset is considered as a probability distribution, where an appearance probability of each sample is equal to a frequency of the sample in the dataset. Second, a definition of the Wasserstein distance is used to calculate a distance between the two datasets. Calculation of the Wasserstein distance involves finding, in a sample space, optimal coupling (coupling) that minimizes a total cost of converting one distribution to another distribution. A mathematical expression is as follows: $W \left(X, Y\right) = {inf}_{γ ∈ \prod \left(X, Y\right)} ∬ γ \left(x, y\right) dxdy$ (Formula 9) where *X* and *Y* are distributions of the two datasets, ∏(*X, Y*) is a set of all possible coupling between *X* and *Y,* and *γ*(*x, y*) is a cost function defined in the sample space.

Therefore, a value of the Wasserstein distance represents a minimum cost of converting from one distribution to another distribution. A smaller Wasserstein distance usually indicates higher similarity between two datasets, and a larger distance indicates a larger difference between the two datasets.

### (4) Kolmogorov-Smirnov (Kolmogorov-Smirnov, KS) distance

The KS distance is a statistical quantity used to compare a difference between two probability distributions, and is used to measure a maximum vertical distance between two cumulative distribution functions (CDF). The KS distance is widely used to check whether two samples are from a same distribution, but can also be used to compare similarity between any two probability distributions. If the KS distance is zero, it indicates that the two distributions are completely the same. If the KS distance is larger, it indicates that the two distributions differ greatly.

Calculation steps of the KS distance are as follows: First, sorting is performed on each sample set based on magnitudes of values in the sample set, and then a cumulative distribution function value corresponding to each value is calculated. In this way, a CDF is generated for each sample set. Finally, for each sample value, an absolute difference between two CDFs is calculated and a largest difference is found. The largest difference is the KS distance. Mathematically, calculation of the KS distance can be represented as follows: ${D}_{KS} = {sup}_{x} \left|{F}_{1}\left(x\right)-{F}_{2}\left(x\right)\right|$ (Formula 10) where *F*₁(*x*) and *F*₂(*x*) are respectively cumulative distribution functions of two sample sets, and x is a sample point.

If the KS distance is used to measure a difference between datasets, the datasets can be considered as probability distributions. In this way, the KS distance is used to indirectly compare similarity between the datasets. It is assumed that there are two datasets represented as a dataset *X* and a dataset *Y,* and each dataset includes a plurality of samples. In this case, the following steps may be used to compare a distribution difference between the two datasets: Sample data is obtained from the dataset *X* and the dataset *Y;* each dataset is considered as a probability distribution and respective empirical distribution functions are calculated; and the KS distance ${D}_{KS} = {sup}_{x} \left|{F}_{X}\left(x\right)-{F}_{Y}\left(x\right)\right|$ is used to calculate a maximum difference between the two empirical distribution functions.

*F_{X}*(*x*) and *F_{Y}*(*x*) are respectively the empirical distribution functions of the datasets *X* and Y, and x is a sample point.

Therefore, when the KS distance is smaller, it indicates that the empirical distribution functions of the two datasets are similar, that is, a difference between the two datasets is small. If the KS distance is larger, it indicates that a difference between the two datasets is larger.

S420: The terminal device determines second information based on the first information.

The second information includes the statistical distance, and the terminal device determines a statistical distance between a local dataset of the terminal device and a central dataset based on the first information.

Optionally, the terminal device calculates a distance between the local dataset and the central dataset based on a calculation manner of the statistical distance and the central dataset that are indicated by the network device.

Optionally, the terminal device calculates a distance between statistical information of the local dataset and statistical information of the central dataset based on a calculation manner of the statistical distance and the statistical information of the central dataset that are indicated by the network device.

Optionally, the statistical information includes at least one of the following: an empirical distribution, a statistical moment, compression, down-sampling, and the like.

It should be understood that the local dataset is a dataset collected by the terminal device.

Optionally, the second information further includes a communication capability of the terminal device.

It should be understood that the communication capability of the terminal device refers to various capabilities and performance of the terminal device during communication, and includes aspects such as a capability to connect to a network device, a supported communication protocol, a transmission rate, power consumption efficiency, a location service, and sensor data obtaining that are of the terminal device.

For example, the communication capability of the terminal device may be measured by using a distance between the terminal device and the network device.

It should be understood that a signal to interference plus noise ratio (Signal to Interference plus Noise Ratio, SINR) is an indicator used to measure signal quality in wireless communication, is a ratio of received signal power to received interference and noise power, and is mathematically expressed as: $SINR = \frac{P}{I + N}$. The noise *N* and the interference *I* are relatively stable. Therefore, $SINR = \frac{P}{I + N} ∝ \frac{{P}_{tx}}{{x}^{2}}$. It can be learned that, to ensure that a receiving end (for example, the network device) receives similar *SINRs*, transmit power *Pₜₓ* of a transmitting end (for example, the terminal device) and a distance square *x*² are to remain constant. Therefore, *x*² may represent the communication capability of the terminal device, to be specific, the distance between the terminal device and the network device may represent the communication capability of the terminal device.

For example, the communication capability of the terminal device may alternatively be measured by using communication quality of the terminal device or energy consumption per unit data amount of the terminal device.

It should be understood that, the communication capability may be measured by using indicators such as actual communication quality, speed, and power consumption, that is, calculating, based on a historical communication status, energy consumption for sending a unit amount of data. This is because the historical communication status of the terminal device provides performance of the terminal device in different conditions.

For example, a mobile application may use an API (for example, Network Stats Manager of Android) of a mobile device to monitor a data usage status and a data transmission speed of the application. Such measurement may be used to calculate energy consumption required to send a unit amount of data under a specific network condition.

S430: The terminal device sends the second information to the network device, and correspondingly, the network device receives the second information.

The second information includes the statistical distance.

Optionally, the second information further includes the communication capability.

S440: The network device determines the terminal device based on the received second information.

Optionally, the second information includes the statistical distance, and the network device determines the terminal device based on the statistical distance.

For example, the network device receives second information from each of N terminal devices, where the second information includes a statistical distance of each of the N terminal devices. The network device determines, based on a statistical distance ratio corresponding to each of the N terminal devices, to select M terminal devices with a largest statistical distance ratio.

The statistical distance ratio is a ratio of the statistical distance of each of the N terminal devices to a largest statistical distance among statistical distances of the N terminal devices.

Based on this solution, the network device can select a terminal device based on a statistical distance between datasets, to be specific, select a terminal device with a largest statistical distance ratio, that is, a dataset with a large sample error, so that model convergence is accelerated.

Optionally, the second information further includes the communication capability, and the network device determines the terminal device based on the statistical distance and the communication capability.

For example, the network device receives second information from each of the N terminal devices, where the second information includes a statistical distance of each of the N terminal devices and a communication capability of each of the N terminal devices. The network device determines, based on a statistical distance ratio and a communication capability ratio that correspond to each of the N terminal devices, M terminal devices with a largest target value, where the target value is a sum or a weighted sum of the statistical distance ratio and the communication capability ratio.

The statistical distance ratio is a ratio of the statistical distance of each of the N terminal devices to a largest statistical distance among statistical distances of the N terminal devices, and the communication capability ratio is a ratio of the communication capability of each of the N terminal devices to a largest communication capability in communication capabilities of the N terminal devices.

Based on this solution, the terminal device is selected by comprehensively considering two factors: the communication capability and the statistical distance, and weights of the two factors in selecting the terminal device are flexibly adjusted through weighting. This comprehensive selection manner can balance impact of the statistical distance and the communication capability, and can adapt to different requirements on the communication capability and data similarity in different scenarios.

It should be noted that an example of specific calculation in step S440 is described in detail in the method 500. Details are not described herein.

S450: The network device sends indication information to the terminal device, and correspondingly, the terminal device receives the indication information from the network device.

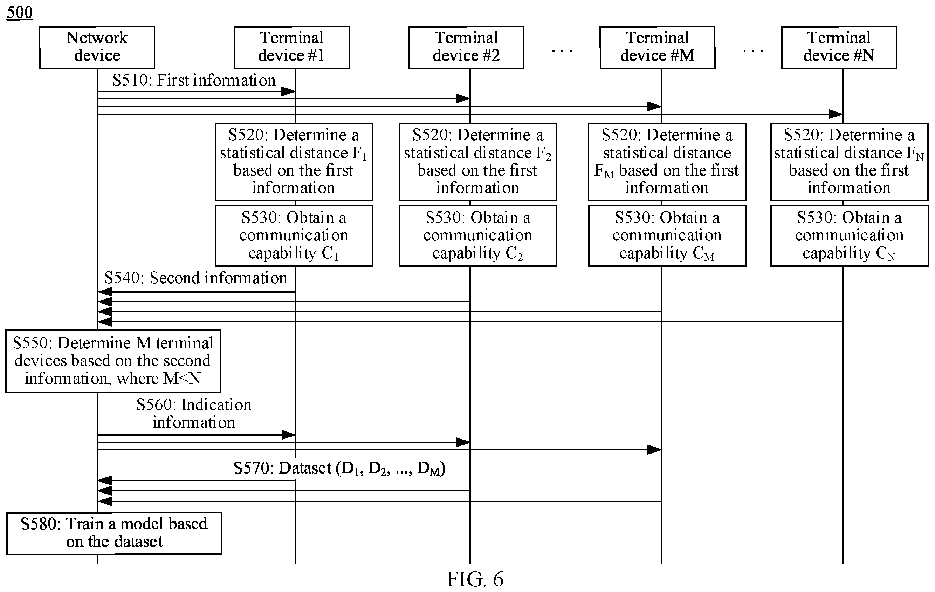

Optionally, the network device may broadcast a set of selected terminal devices (for example, a terminal device #1, a terminal device #2, ..., a terminal device #M in FIG. 6).

Optionally, the broadcast includes identifiers of the selected terminal devices.

Optionally, the network device may send one piece of selected signaling to each of the selected M terminal devices, where the selected signaling indicates that the terminal device has been selected by the network device.

S460: The terminal device sends a dataset to the network device, and correspondingly, the network device receives the dataset from the terminal device.

For example, the terminal device first needs to collect a local dataset. In other words, the local dataset is a group of data locally generated, collected, or stored by the terminal device, and includes information generated by a user, a sensor record, data generated by an application, and the like. The data may cover various types, for example, text, images, audio, and sensor reading. Specific content is determined based on an application scenario and a function of the terminal device. This is not limited in this application. Then, the terminal device establishes a communication connection to the network device, encapsulates and sends the local dataset to the network device, to implement data transmission and sharing.

S470: The network device performs model training based on the received dataset.

For example, the network device receives a dataset from each of the selected M terminal devices, and the network device performs model training based on the dataset of each of the M terminal devices.

It should be understood that the network device trains a model based on the received dataset. A fixed quantity of rounds may be selected for the training, or the training may be stopped when the model converges.

Optionally, the network device trains, based on the received dataset, a new model or a model stored after a previous round of training, to obtain an updated model.

Optionally, the central dataset is updated based on the updated model, and new data may be added, outdated data may be deleted, or existing data may be updated.

It should be understood that the dataset (for example, the central dataset or the dataset of the terminal device) described above may be a part or all of the dataset, or may be indication information of the dataset. This is not limited in this application.

It should be noted that an updated central dataset is used for next-round selection of terminal devices.

The solutions of this application may be applied to a scenario of a plurality of rounds of sampling. It is assumed that K rounds of sampling are set, and each of the K rounds of sampling includes at least two terminal devices and one network device. For example, a c^{th} round of sampling in the K rounds of sampling includes N terminal devices and one network device. An *i*^{th} terminal device in the N terminal devices collects a local dataset *Dᵢ*, and calculates a statistical distance between the local dataset *Dᵢ* and a central dataset *D_{c}*. The network device selects M terminal devices based on a statistical distance and a communication capability that correspond to each of the N terminal devices, and sends indication information based on the selection, where the indication information indicates the selected M terminal devices, and the M terminal devices send collected local datasets to the network device in response to the indication information. The network device performs T rounds of training on a model based on a dataset of each of the M terminal devices, to obtain a trained and updated model *W_{c}*.

For another example, a (c+1)^{th} round of sampling in the K rounds of sampling includes H terminal devices and one network device. An *i*^{th} terminal device in the H terminal devices collects a local dataset *Dᵢ*, and calculates a statistical distance between the local dataset *Dᵢ* and a central dataset *D*_{*c*+1}. The network device selects Z terminal devices based on a statistical distance and a communication capability that correspond to each of the H terminal devices, and sends indication information based on the selection, where the indication information indicates the selected Z terminal devices, and the Z terminal devices send collected local datasets to the network device in response to the indication information. The network device performs T rounds of training on a model based on a dataset of each of the Z terminal devices, to obtain a trained and updated model *W*_{*c*+1}.

It should be understood that H in the (c+1)^{th} round of sampling is less than N in the c^{th} round of sampling, and the central dataset *D*_{c+1} in the (c+1)^{th} round of sampling is a dataset updated by the network device based on the model *W_{c}*, in the c^{th} round of sampling.

The following describes the solutions of this application by using the c^{th} round of sampling in the K rounds of sampling as an example.

FIG. 6 is a diagram of a node selection method 500 according to an embodiment of this application. The method 500 may be considered as specific details of the method 400, and may include but is not limited to steps S510 to S580.

S510: A network device sends first information to N terminal devices (for example, a terminal device #1, a terminal device #2, ..., a terminal device #M, ..., a terminal device #N in FIG. 6).

Correspondingly, each of the N terminal devices receives the first information from the network device.

The first information includes information about a central dataset, and the information about the central dataset may be the central dataset or statistical information of the central dataset.

It should be understood that the central dataset is a dataset of the network device, and the dataset of the network device is used for model training. For ease of description, in this application, the central dataset is used to describe the dataset of the network device. This is not limited.

Optionally, the central dataset is a dataset obtained by the network device based on an updated model after training on a previous-round model ends.

For example, the previous-round model is a model *W*_{*c*-1} obtained through training performed by the network device in a (c-1)^{th} round of sampling. For ease of description, a central dataset in a current round of sampling is represented by *D_{c}*, and a central dataset in a previous round of sampling is represented by *D*_{*c*-1}.

It should be understood that, in a process of the (c-1)^{th} round of sampling, the network device sends the first information to R terminal devices, and determines to select J terminal devices based on a statistical distance and a communication capability that are sent by each of the R terminal devices. The J terminal devices send local datasets to the network device, to train a model *W*_{*c*-2} in a (c-2)^{th} round of sampling. After the model is updated, a model *W*_{*c*-1} is obtained. The central dataset *D*_{*c*-1} is updated based on the model, to obtain the central dataset *D_{c}* used for a c^{th} round of sampling. R in the (c-1)^{th} round of sampling is greater than N in the c^{th} round of sampling.

Optionally, the statistical information of the central dataset includes at least one of the following: an empirical distribution, a statistical moment, compression, down-sampling, and the like.

For ease of description, the statistical information of the central dataset is represented by *T*(*D_{c}*) in the following, and a local dataset collected by a terminal device #*i* is represented by *Dᵢ*, where *i*= 1, 2, ..., M, ..., N. For example, a local dataset collected by the terminal device #1 is *D*₁, a local dataset collected by the terminal device #2 is *D*₂, ..., a local dataset collected by the terminal device #M is *D_{M}*, ..., and a local dataset collected by the terminal device #N is *D_{N}*. However, this application is not limited thereto.

Optionally, the first information further includes indication information that indicates a calculation manner of a statistical distance, and the calculation manner of the statistical distance includes a Fréchet distance, a maximum mean discrepancy, a Wasserstein distance, or a Kolmogorov-Smirnov distance.

S520: Each of the N terminal devices correspondingly determines a statistical distance *F*₁, *F*₂, ... , *F_{M}*, ... *F_{N}* based on the first information.

It should be understood that the terminal device #i calculates a statistical distance between the central dataset *D_{c}* and the local dataset *Dᵢ* based on the first information, to obtain a statistical distance *Fᵢ*, where *i* = 1, 2, ..., M, ..., N.

Optionally, when the first information is the central dataset *D_{c},* the terminal device *#i* calculates the statistical distance *Fᵢ* between the central dataset *D_{c}* and the local dataset *Dᵢ*.

For example, when the first information indicates that the calculation manner of the statistical distance is the Fréchet distance, a statistical distance F(1) is as follows: $F \left({D}_{c}, {D}_{i}\right) = {inf}_{αβ} {max }_{t} d \left({D}_{c}\left(α\left(t\right)\right),{D}_{i}\left(β\left(t\right)\right)\right)$ (Formula 11)

For example, when the first information indicates that the calculation manner of the statistical distance is the maximum mean discrepancy, a statistical distance F(2) is as follows: $F \left({D}_{c}, {D}_{i}\right) = {sup}_{f} \left({E}_{Dc}\left[f\left(x\right)\right],{E}_{Di}\left[f\left(y\right)\right]\right)$ (Formula 12)

For example, when the first information indicates that the calculation manner of the statistical distance is the Wasserstein distance, a statistical distance F(3) is as follows: $F \left({D}_{c}, {D}_{i}\right) = {in f}_{γ ∈ \prod \left[Dc, Di\right]} ∬ γ \left(x, y\right) dxdy$ (Formula 13)

For example, when the first information indicates that the calculation manner of the statistical distance is the Kolmogorov-Smirnov distance, a statistical distance F(4) is as follows: $F \left({D}_{c}, {D}_{i}\right) = {sup}_{x} \left‖{\hat{F}}_{Dc}\left(x\right)-{\hat{F}}_{Di}\left(x\right)\right‖$ (Formula 14) where *F̂_{D_{c}}*(*x*) and *F̂_{Dᵢ}*(*x*) are respectively empirical distributions of the central dataset *D_{c}* and the local dataset *Dᵢ*, and x is a sample point.

Optionally, when the first information is the statistical information of the central dataset, the terminal device #i calculates a statistical distance between the statistical information *T*(*D_{c}*) of the central dataset and statistical information *T*(*Dᵢ*) of the local dataset.

It should be understood that a difference between the statistical information *T*(*D_{c}*) of the central dataset *D_{c}* and the statistical information *T*(*Dᵢ*) of the local dataset *Dᵢ* may also reflect a statistical distance between two datasets.

For example, when the first information indicates that the calculation manner of the statistical distance is the Fréchet distance, a statistical distance F(5) is as follows: $F \left(T\left({D}_{c}\right),T\left({D}_{i}\right)\right) = {inf}_{αβ} {max}_{t} d \left(T\left({D}_{c}\left(α\left(t\right)\right)\right),T\left({D}_{i}\left(β\left(t\right)\right)\right)\right)$ (Formula 15)

For example, when the first information indicates that the calculation manner of the statistical distance is the maximum mean discrepancy, a statistical distance F(6) is as follows: $F \left(T\left({D}_{c}\right),T\left({D}_{i}\right)\right) = {sup}_{f} \left({E}_{T \left({D}_{c}\right)}\left[f\left(x\right)\right], {E}_{T \left({D}_{i}\right)}\left[f\left(y\right)\right]\right)$ (Formula 16)

For example, when the first information indicates that the calculation manner of the statistical distance is the Wasserstein distance, a statistical distance F(7) is as follows: $F \left(T,\left({D}_{c}\right),T\left({D}_{i}\right)\right) = {in f}_{γ ∈ \prod \left[T\left(Dc\right),T\left(Di\right)\right]} ∬ γ \left(x, y\right) dxdy$ (Formula 17)

For example, when the first information indicates that the calculation manner of the statistical distance is the Kolmogorov-Smirnov distance, a statistical distance F(8) is as follows: $F \left(T\left({D}_{c}\right),T\left({D}_{i}\right)\right) = {sup}_{x} \left‖{\hat{F}}_{T \left(Dc\right)}-{\hat{F}}_{T \left(Di\right)}\left(x\right)\right‖$ (Formula 18) where *F̂*_{*T*(*D_{c}*)}*(x)* and *F̂*_{*T*(*Di*})(*x*) are respectively empirical distributions of the central dataset *D_{c}* and the local dataset *Dᵢ*, and x is a sample point.

Optionally, the terminal device may further calculate the statistical distance between the central dataset and the local dataset based on a statistical information configuration method.

Optionally, in S530, the N terminal devices obtain respective communication capabilities *C*₁, *C*₂, ... , *C_{M}*, ... *C_{N}*.

For example, the terminal device #i obtains a communication capability *Cᵢ* of the terminal device #*i*, where *i*=1, 2, ..., M, ..., N.

Optionally, a square ${x}_{i}^{2}$ of a distance between the terminal device #i and the network device may indicate the communication capability *Cᵢ*.

It should be understood that the SINR is an indicator used to measure signal quality in wireless communication, is a ratio of received signal power to received interference and noise power, and is mathematically expressed as: $SINR = \frac{P}{I + N}$. *The noise N* and the interference *I* are relatively stable. Therefore, $SINR = \frac{P}{I + N} ∝ \frac{{P}_{tx}}{{x}^{2}}$. It can be learned that, to ensure that a receiving end receives similar *SINRs,* transmit power *Pₜₓ* of a transmitting end and a distance square *x*² are to remain constant. Therefore, *x*² may represent the communication capability of the terminal device, to be specific, the distance between the terminal device and the network device may represent the communication capability of the terminal device.

Optionally, the communication capability of the terminal device may alternatively be measured by using communication quality of the terminal device or energy consumption per unit data amount of the terminal device.

It should be understood that, the communication capability may be measured by using indicators such as actual communication quality, speed, and power consumption, that is, calculating, based on a historical communication status, energy consumption for sending a unit amount of data. This is because the historical communication status of the terminal device provides performance of the node in different conditions.

S540: Each of the N terminal devices sends second information to the network device, where the second information includes the statistical distance *Fᵢ* . Optionally, the second information further includes the communication capability *Cᵢ*.

Correspondingly, the network device receives the second information from each of the N terminal devices.

S550: The network device determines M terminal devices based on the second information, where M≤N.

Optionally, the network device determines the M terminal devices based on the statistical distance of each of the N terminal devices.

For example, the network determines a largest statistical distance max*_{N}F*(*D_{c}*, *D_{N}*) in statistical distances of the N terminal devices based on the statistical distance of each of the N terminal devices. Then, the network device traverses the N terminal devices to obtain a ratio $\frac{F \left({D}_{c}, {D}_{i}\right)}{{max}_{N} F \left({D}_{c}, {D}_{N}\right)}$ of the statistical distance of each terminal device to the largest statistical distance; and selects M terminal devices with a largest statistical distance ratio $\frac{F \left({D}_{c}, {D}_{i}\right)}{{max}_{N} F \left({D}_{c}, {D}_{N}\right)}$. *D_{c}* is a central dataset. *Dᵢ* is a dataset of the terminal device #*i*. For example, *D_{N}* is a dataset of the terminal device #N.

For example, the network determines a largest statistical distance max*_{N}F*(*T*(*D_{c}*)) in the statistical distances of the N terminal devices based on the statistical distance of each of the N terminal devices. Then, the network device traverses the N terminal devices to obtain a ratio $\frac{F \left(T\left({D}_{c}\right),T\left({D}_{i}\right)\right)}{{max}_{N} F \left(T\left({D}_{c}\right),T\left({D}_{N}\right)\right)}$ of the statistical distance of each terminal device to the largest statistical distance; and selects M terminal devices with a largest statistical distance ratio $\frac{F \left(T\left({D}_{c}\right),T\left({D}_{i}\right)\right)}{{max}_{N} F \left(T\left({D}_{c}\right),T\left({D}_{N}\right)\right)}$. *T*(*D_{c}*) is statistical information of the central dataset *D_{c}.* T(*Dᵢ*) is statistical information of the dataset *Dᵢ* of the terminal device #i. For example, T(*D_{N}*) is statistical information of the dataset *D_{N}* of the terminal device #N.

Based on this solution, the network device can select a terminal device based on a statistical distance between datasets, to be specific, select a terminal device with a largest statistical distance ratio, that is, a dataset with a large sample error, so that model convergence is accelerated.

Optionally, the network device selects the M terminal devices based on the statistical distance and the communication capability that are of each of the N terminal devices.

For example, the network first determines a largest statistical distance max*_{N}F*(*D_{c}, D_{N}*) in statistical distances of the N terminal devices and a largest communication capability max*_{N} C_{N}* in the communication capabilities of the N terminal devices based on the statistical distance of each of the N terminal devices. Then, the network device traverses the N terminal devices to obtain a ratio $\frac{F \left({D}_{c}, {D}_{i}\right)}{{max}_{N} F \left({D}_{c}, {D}_{N}\right)}$ of the statistical distance of each terminal device to the largest statistical distance and a ratio $\frac{{C}_{i}}{{max}_{N} {C}_{N}}$ of the communication capability of each of the N terminal devices to the largest communication capability; and selects M terminal devices with a largest target value $g \left(F\left({D}_{c}, {D}_{i}\right), {C}_{i}\right) = \frac{F \left({D}_{c}, {D}_{i}\right)}{{max}_{N} F \left({D}_{c}, {D}_{N}\right)} + \frac{{C}_{i}}{{max}_{N} {C}_{N}}$. *D_{c}* is a central dataset. *Dᵢ* is a dataset of the terminal device #i. For example, *D_{N}* is a dataset of the terminal device #N. *Cᵢ* is a communication capability of the terminal device *#i.* For example, *C_{N}* is a communication capability of the terminal device #N.

For example, the network first determines a largest statistical distance max*_{N}F*(*T*(*D_{c}*), *T*(*D_{N}*)) in statistical distances of the N terminal devices and a largest communication capability max*_{N} C_{N}* in the communication capabilities of the N terminal devices based on the statistical distance of each of the N terminal devices. Then, the network device traverses the N terminal devices to obtain a ratio $\frac{F \left(T\left({D}_{c}\right),T\left({D}_{i}\right)\right)}{{max}_{N} F \left(T\left({D}_{c}\right),T\left({D}_{N}\right)\right)}$ of the statistical distance of each terminal device to the largest statistical distance and a ratio $\frac{{C}_{i}}{{max}_{N} {C}_{N}}$ of the communication capability of each of the N terminal devices to the largest communication capability; and selects M terminal devices with a largest target value $g \left(F\left(T\left({D}_{c}\right),T\left({D}_{i}\right)\right),{C}_{i}\right) = \frac{F \left(T\left({D}_{C}\right),T\left({D}_{i}\right)\right)}{{max}_{N} F \left(T\left({D}_{c}\right),T\left({D}_{N}\right)\right)} + \frac{{C}_{i}}{{max}_{N} {C}_{N}} .$ *. T*(*D_{c}*) is statistical information of the central dataset *D_{c}.* T(*Dᵢ*) is statistical information of the dataset *Dᵢ* of the terminal device *#i.* For example, T(*D_{N}*) is statistical information of the dataset *D_{N}* of the terminal device #N. *Cᵢ* is a communication capability of the terminal device *#i.* For example, *C_{N}* is a communication capability of the terminal device #N.

Based on this solution, the terminal device is selected by comprehensively considering two factors: the communication capability and the statistical distance. This can balance impact of the statistical distance and the communication capability, and can adapt to different requirements on the communication capability and data similarity in different scenarios.

Optionally, if there is a significant preference for the communication capability or the statistical distance when the network device selects the terminal device, weights of the communication capability and the statistical distance may be adjusted by using a hyperparameter α.

For example, the network device selects M terminal devices with a largest target value ${g}_{α} \left(F\left({D}_{c}, {D}_{i}\right), {C}_{i}\right) = \frac{F \left({D}_{c}, {D}_{i}\right)}{{max}_{N} F \left({D}_{c}, {D}_{N}\right)} + α \frac{{C}_{i}}{{max}_{N} {C}_{N}} .$.

For example, the network device selects M terminal devices with a largest target value ${g}_{α} \left(F\left(T\left({D}_{c}\right),T\left({D}_{i}\right)\right),{C}_{i}\right) = \frac{F \left(T\left({D}_{C}\right),T\left({D}_{i}\right)\right)}{{max}_{N} F \left(T\left({D}_{c}\right),T\left({D}_{N}\right)\right)} + α \frac{{c}_{i}}{{max}_{N} {C}_{N}} .$.

Based on this solution, a tradeoff between the communication capability and the statistical distance can be flexibly balanced by adjusting the hyperparameter α, to meet an optimization objective in a specific requirement or scenario. In actual application, an optimal value of α may be selected by using a method like cross-validation, so as to achieve optimal selection.

S560: The network device sends indication information to the terminal device, and correspondingly, the terminal device receives the indication information from the network device.

Optionally, the network device may broadcast a set of selected terminal devices (for example, a terminal device #1, a terminal device #2, ..., a terminal device #M in FIG. 6).

Optionally, the broadcast includes identifiers of the selected terminal devices.

Optionally, the network device may send one piece of selected signaling to each of the selected M terminal devices, where the selected signaling indicates that the terminal device has been selected by the network device.

For example, the network device separately sends one piece of selected signaling to the terminal device #1, the terminal device #2, ..., the terminal device #M.

S570: Each of the selected M terminal devices sends a dataset to the network device.

Correspondingly, the network device receives the dataset from each of the M terminal devices.

For example, each of the M terminal devices sends a dataset (*D*₁, *D*₂, ... , *D_{M}*) to the network device.

S580: The network device trains a model based on the received dataset (*D*₁, *D*₂, ... ,*D_{M}*).

Optionally, the network device may determine a fixed quantity T of training rounds, and perform model training to obtain an updated model *W_{c}*.

Optionally, the central dataset is updated based on the model *W_{c}*, and an updated central dataset may be used for a next round of sampling.

After obtaining a training dataset required by the model, the network device may train the model.

Optionally, if the model has not been converged and a plurality of times of operations need to be performed, a procedure shown in FIG. 6 may be repeated.

For example, the network device performs T times of model training in the c^{th} round of sampling in K rounds of sampling, to obtain a model *W_{c}*. The procedure shown in FIG. 6 is repeated, and the network device may perform T times of model training again in a (c+1)^{th} round of sampling, to obtain a model *W*_{*c*+1}. A value of K may be preset, or sampling may be stopped until the model converges.

It should be understood that a central dataset of a next round of sampling, namely, the (c+1)^{th} round of sampling, is a central dataset updated after the c^{th} round of sampling ends.

Optionally, when the (c+1)^{th} round of sampling is performed, a quantity of terminal devices may be reduced. For example, H terminal devices may be selected to perform the (c+1)^{th} round of sampling, where H is less than N.

According to the solution provided in this embodiment of this application, after performing K*T times of model training in the K rounds of sampling, the network device obtains a model after the K*T times of model training are completed, so that a convergence rate in a model training process can be improved. In addition, in the solution of this application, the model is trained in a plurality of rounds, so that requirements on computing, storage, and communication capabilities of the device can be reduced.

It may be understood that, when an operation for the model, such as training and/or inference, is not performed by the network device, steps S470 and S580 may be performed by an operation network element of the model instead. The method further includes: The network device sends operation-related information of the model or reporting information of the model to the operation network element of the model.

It should be understood that the dataset (for example, the central dataset or the dataset of the terminal device) described above may be a part or all of the dataset, or may be indication information of the dataset. This is not limited in this application.

The foregoing describes in detail the node selection method provided in this application. As described above, the method provided in this application is applicable to an AI scenario, and the foregoing model is an AI model. The method in this application is alternatively applicable to a non-AI scenario. For example, if the network device needs to select a dataset conditionally, the method in this application may be used.

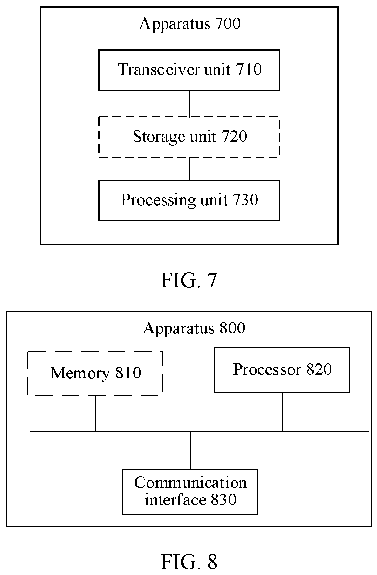

The foregoing describes, with reference to FIG. 5 and FIG. 6, the node selection method embodiments provided in this application. The following describes, with reference to FIG. 7, apparatus embodiments provided in this application. It should be understood that, the apparatus embodiments and the method embodiments correspond to each other, and for similar descriptions, refer to the method embodiments.

FIG. 7 is a diagram of an apparatus 700 according to an embodiment of this application. The apparatus 700 may include a transceiver unit 710, a storage unit 720, and a processing unit 730. The transceiver unit 710 is configured to receive or send information and/or data. The transceiver unit 710 may also be referred to as a communication interface or a communication unit. The storage unit 720 is configured to implement a corresponding storage function and store corresponding information and/or data. The processing unit 730 is configured to perform data processing, so that the apparatus 700 implements the foregoing node selection method.

In a possible implementation, the apparatus 700 may include only the transceiver unit 710 and the processing unit 730.

In a design, the apparatus 700 may perform an action performed by the network device in the foregoing method embodiments.

The apparatus 700 includes a transceiver unit 710 and a processing unit 730. The transceiver unit 710 is configured to: send first information, where the first information includes information about a first dataset of a network device; and receive second information from each of N terminal devices, where the second information includes a statistical distance of each of the N terminal devices, and the statistical distance of each of the N terminal devices indicates a distance between a second dataset of each of the N terminal devices and the first dataset. The processing unit 730 is configured to determine M terminal devices based on the second information.

In a possible implementation, the transceiver unit 710 is further configured to: send indication information, where the indication information indicates the M terminal devices; and receive the second dataset from each of the M terminal devices. The processing unit 730 is further configured to perform model training based on the second dataset of each of the M terminal devices.

In a possible implementation, the transceiver unit 710 is specifically configured to: send a broadcast signal, where the broadcast signal includes first indication information, and the first indication information indicates a set of the M terminal devices; or send second indication information to each of the M terminal devices, where the second indication information indicates the respective terminal devices.

In a possible implementation, the processing unit 730 is specifically configured to determine the M terminal devices based on a statistical distance ratio corresponding to each of the N terminal devices, where the statistical distance ratio is a ratio of a statistical distance of each of the N terminal devices to a largest statistical distance among the statistical distances of the N terminal devices.

The M terminal devices are M terminal devices with a largest statistical distance ratio in the N terminal devices.

In a possible implementation, the processing unit 730 is specifically configured to determine the M terminal devices based on the statistical distance ratio and a communication capability ratio that correspond to each of the N terminal devices, where the statistical distance ratio is a ratio of a statistical distance of each of the N terminal devices to a largest statistical distance among the statistical distances of the N terminal devices, and the communication capability ratio is a ratio of the communication capability of each of the N terminal devices to a largest communication capability in the communication capabilities of the N terminal devices.

The M terminal devices are M terminal devices having the top M largest target values among the N terminal devices, and the target value is a sum or a weighted sum of the statistical distance ratio and the communication capability ratio.

In a design, the apparatus 700 may perform an action performed by the terminal device in the foregoing method embodiments.

The apparatus 700 includes: a transceiver unit 710 and a processing unit 730. The transceiver unit 710 is configured to: receive first information from a network device, where the first information includes information about a first dataset of the network device; send second information, where the second information includes a statistical distance, the statistical distance indicates a distance between a second dataset of a terminal device and the first dataset, and the second information is used to determine M terminal devices; receive indication information, where the indication information indicates the M terminal devices; send the second dataset in response to the indication information, where the second dataset is used for model training.

In a possible implementation, the transceiver unit 710 is specifically configured to: receive a broadcast signal, where the broadcast signal includes first indication information, and the first indication information indicates a set of the M terminal devices; or receive second indication information, where the second indication information indicates the terminal device.

In a possible implementation, the processing unit 730 is configured to determine a statistical distance.

Optionally, the information about the first dataset is the first dataset, and the statistical distance is the distance between the second dataset and the first dataset.

Optionally, the information about the first dataset is statistical information of the first dataset, and the statistical distance is a distance between statistical information of the second dataset and the statistical information of the first dataset.

FIG. 8 is a diagram of another apparatus 800 according to an embodiment of this application.

The apparatus 800 may include a memory 810, a processor 820, and a communication interface 830. The memory 810, the processor 820, and the communication interface 830 are connected through an internal connection path. The memory 810 is configured to store instructions. The processor 820 is configured to execute the instructions stored in the memory 810, to control the communication interface 830 to obtain information, or enable the apparatus 800 to implement the foregoing model training method. Optionally, the memory 810 may be coupled to the processor 820 through an interface, or may be integrated with the processor 820.

In a possible implementation, the apparatus 800 may include only the processor 820 and the communication interface 830.

It should be noted that the communication interface 830 uses a transceiver apparatus like but not limited to a transceiver. The communication interface 830 may further include an input/output interface (input/output interface).

The processor 820 stores one or more computer programs, and the one or more computer programs include instructions. When the instructions are run by the processor 820, the apparatus 800 is caused to perform the model training method in the foregoing embodiments.

In an implementation process, steps in the foregoing methods can be performed by using an integrated logic circuit of hardware in the processor 820 or instructions in a form of software. The method disclosed with reference to embodiments of this application may be directly performed by a hardware processor, or may be performed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory 810. The processor 820 reads information from the memory 1110, and completes the steps in the foregoing methods in combination with hardware of the processor. To avoid repetition, details are not described herein again.

In a possible implementation, the apparatus 800 may include only the processor 820 and the communication interface 830, and does not include the memory 810.

Optionally, the communication interface 830 in FIG. 8 may implement the transceiver unit 710 in FIG. 7, and the processor 820 in FIG. 8 may implement the processing unit 730 in FIG. 7.

An embodiment of this application further provides a computer-readable storage medium. The computer-readable storage medium stores program code. When the computer program code is run on a computer, the computer is caused to perform any one of the methods in FIG. 5 or FIG. 6.

An embodiment of this application further provides a computer program product. The computer product includes a computer program. When the computer program is run, a computer is caused to perform any one of the methods in FIG. 5 or FIG. 6.

An embodiment of this application further provides a chip or a chip system, including a circuit. The circuit is configured to perform any one of the methods in FIG. 5 or FIG. 6.

An embodiment of this application further provides a communication system, including a first apparatus and a second apparatus. The first apparatus is configured to perform actions/steps performed by the network device in FIG. 5 or FIG. 6. The second apparatus is configured to perform actions/steps performed by the terminal device in FIG. 5 or FIG. 6.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on specific applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division. During actual implementation, another division manner may be used. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A node selection method, comprising:
sending first information to N terminal devices, wherein the first information comprises information about a first dataset of a network device, and N is an integer greater than 1;
receiving second information from each of the N terminal devices, wherein the second information comprises a statistical distance of each of the N terminal devices, and the statistical distance of each of the N terminal devices indicates a distance between a second dataset of each of the N terminal devices and the first dataset;
determining M terminal devices based on the second information, wherein M is a positive integer, and M is less than or equal to N;
sending indication information, wherein the indication information indicates the M terminal devices;
receiving the second dataset from each of the M terminal devices; and
performing model training based on the second dataset of each of the M terminal devices.

2. The method according to claim 1, wherein the sending the indication information comprises:
sending a broadcast signal, wherein the broadcast signal comprises first indication information, and the first indication information indicates a set of the M terminal devices; or
sending second indication information to each of the M terminal devices, wherein the second indication information indicates the respective terminal devices.

3. The method according to claim 1 or 2, wherein the determining the M terminal devices based on the second information comprises:
determining the M terminal devices based on a statistical distance ratio corresponding to each of the N terminal devices, wherein the statistical distance ratio is a ratio of a statistical distance of each of the N terminal devices to a largest statistical distance among statistical distances of the N terminal devices.

4. The method according to claim 3, wherein
the M terminal devices are M terminal devices with a largest statistical distance ratio in the N terminal devices.

5. The method according to any one of claims 1 to 4, wherein the second information further comprises a communication capability of each of the N terminal devices, and the communication capability comprises at least one of the following: a distance between each of the N terminal devices and the network device, and energy consumption per unit data amount of each of the N terminal devices.

6. The method according to claim 5, wherein the determining the M terminal devices based on the second information comprises:
determining the M terminal devices based on the statistical distance ratio and a communication capability ratio that correspond to each of the N terminal devices, wherein
the statistical distance ratio is the ratio of the statistical distance of each of the N terminal devices to the largest statistical distance among the statistical distances of the N terminal devices; and
the communication capability ratio is a ratio of the communication capability of each of the N terminal devices to a largest communication capability in communication capabilities of the N terminal devices.

7. The method according to claim 6, wherein
the M terminal devices are M terminal devices having the top M largest target values among the N terminal devices, and the target value is a sum or a weighted sum of the statistical distance ratio and the communication capability ratio.

8. The method according to any one of claims 1 to 7, wherein
the information about the first dataset is the first dataset, and the statistical distance is the distance between the second dataset of each of the N terminal devices and the first dataset.

9. The method according to any one of claims 1 to 7, wherein
the information about the first dataset is statistical information of the first dataset, and the statistical distance is a distance between statistical information of the second dataset of each of the N terminal devices and the statistical information of the first dataset.

10. The method according to claim 8 or 9, wherein the distance comprises at least one of the following: a Fréchet distance; a maximum mean discrepancy; an earth mover's (Wasserstein) distance; and a Kolmogorov-Smirnov (Kolmogorov-Smirnov) distance.

11. A node selection method, comprising:
receiving first information from a network device, wherein the first information comprises information about a first dataset of the network device;
sending second information, wherein the second information comprises a statistical distance, the statistical distance indicates a distance between a second dataset of a terminal device and the first dataset, the second information is used to determine M terminal devices, and M is a positive integer;
receiving indication information, wherein the indication information indicates the M terminal devices; and
sending the second dataset in response to the indication information, wherein the second dataset is used for model training.

12. The method according to claim 11, wherein the receiving the indication information comprises:
receiving a broadcast signal, wherein the broadcast signal comprises first indication information, and the first indication information indicates a set of the M terminal devices; or
receiving second indication information, wherein the second indication information indicates the terminal device.

13. The method according to claim 11 or 12, wherein the second information further comprises a communication capability, and the communication capability comprises at least one of the following: a distance between the terminal device and the network device, and energy consumption per unit data amount of the terminal device.

14. The method according to any one of claims 11 to 13, wherein
the information about the first dataset is the first dataset, and the statistical distance is the distance between the second dataset and the first dataset.

15. The method according to any one of claims 11 to 13, wherein
the information about the first dataset is statistical information of the first dataset, and the statistical distance is a distance between statistical information of the second dataset and the statistical information of the first dataset.

16. The method according to claim 14 or 15, wherein the distance comprises at least one of the following: a Fréchet distance; a maximum mean discrepancy; an earth mover's (Wasserstein) distance; and a Kolmogorov-Smirnov (Kolmogorov-Smirnov) distance.

17. A communication apparatus, comprising a module or a unit configured to perform the method according to any one of claims 1 to 10.

18. A communication apparatus, comprising a processor and a memory, wherein the processor is coupled to the memory, and is configured to read and execute instructions in the memory, to perform the method according to any one of claims 1 to 10.

19. A communication apparatus, comprising a module or a unit configured to perform the method according to any one of claims 11 to 16.

20. A communication apparatus, comprising a processor and a communication interface, wherein the communication interface is connected to the processor, the communication interface is configured to obtain a program or instructions, and the processor runs the program or the instructions to perform the method according to any one of claims 1 to 10, or perform the method according to any one of claims 11 to 16.

21. A computer-readable storage medium, wherein the computer-readable storage medium stores computer program code, and when the computer program code is run on a computer, the computer is caused to perform the method according to any one of claims 1 to 10 or the method according to any one of claims 11 to 16.

22. A chip or a chip system, comprising a circuit, wherein the circuit is configured to perform the method according to any one of claims 1 to 10 or the method according to any one of claims 11 to 16.

23. A communication system, comprising:
a first apparatus, wherein the first apparatus is configured to perform the method according to any one of claims 1 to 10; and
a second apparatus, wherein the second apparatus is configured to perform the method according to any one of claims 11 to 16.
